# EUROPEAN PATENT APPLICATION

(11) **EP 4 447 539 A1**
(43) Date of publication of application: **16.10.2024**
(21) Application number: 22918169.8
(22) Date of filing: 25.07.2022
(51) Int. Cl.: H04W 28/04

(54) **MULTI-LINK COMMUNICATION METHOD AND MULTI-LINK DEVICE**

(30) Priority: 10.01.2022 CN 202210023124
(71) Applicant: Huawei Technologies Co., Ltd., Shenzhen, Guangdong 518129 (CN)
(72) Inventor: LI, Yiqing, Shenzhen, Guangdong 518129 (CN); LI, Yunbo, Shenzhen, Guangdong 518129 (CN); GUO, Yuchen, Shenzhen, Guangdong 518129 (CN); GAN, Ming, Shenzhen, Guangdong 518129 (CN)
(74) Representative: Körber, Martin Hans
(86) International application number: PCT/CN2022/107619
(87) International publication number: WO 2023/130713

(57) **Abstract**

Embodiments of this application provide a multi-link communication method and a multi-link device. The multi-link device respectively receives a first A-MPDU and a second A-MPDU over a first link and a second link, where the first A-MPDU and the second A-MPDU have a same traffic identifier, and the first A-MPDU is received before the second A-MPDU. The method includes: The multi-link device determines a start sequence number or an end sequence number of a scoreboard on the first link based on the first A-MPDU received over the second link; and the multi-link device sends a first block acknowledgment frame over the first link based on the start sequence number or the end sequence number of the scoreboard on the first link and the received second A-MPDU, where the first block acknowledgment frame is used to acknowledge a receiving status of the second A-MPDU. According to the method in this application, receiving devices of different links can correctly feed back receiving statuses of all MPDUs in received A-MPDUs.

## Description

This application claims priority to Chinese Patent Application No. 202210023124.6, filed with the China National Intellectual Property Administration on January 10, 2022 and entitled "MULTI-LINK COMMUNICATION METHOD AND MULTI-LINK DEVICE", which is incorporated herein by reference in its entirety.

### TECHNICAL FIELD

Embodiments of this application relate to the field of communication technologies, and more specifically, to a multi-link communication method and a multi-link device.

### BACKGROUND

With development of wireless technologies, a multi-link device may support multi-link communication, for example, perform communication in frequency bands 2.4 GHz, 5 GHz, and 6 GHz at the same time, to select an optimal frequency band and ensure communication quality of the multi-link device.

In a multi-link communication scenario, an access point multi-link device may send, along a plurality of links, data packets corresponding to a same traffic identifier to a station multi-link device. When a station of each link maintains a local scoreboard, stations of different links may not be able to correctly feed back receiving statuses of all MPDUs in received aggregated medium access control protocol data units (aggregated medium access control protocol data unit, A-MPDU) in an existing block acknowledgment mechanism.

Therefore, in the multi-link communication scenario, how to ensure that receiving devices of different links can correctly feed back receiving statuses of all MPDUs in received A-MPDUs is a technical problem that urgently needs to be resolved at present.

### SUMMARY

Embodiments of this application provide a multi-link communication method and a multi-link device. In a multi-link communication scenario, when a data transmit end sends, along a plurality of links, a plurality of A-MPDUs corresponding to a same TID to a data receive end, receiving devices of different links can correctly feed back receiving statuses of all MPDUs in the received A-MPDUs.

According to a first aspect, a multi-link communication method is provided. A multi-link device receives a second aggregated medium access control protocol data unit A-MPDU over a first link, and receives a first A-MPDU over a second link, where the first A-MPDU and the second A-MPDU have a same traffic identifier, and the first A-MPDU is received before the second A-MPDU. The method includes: The multi-link device determines a start sequence number or an end sequence number of a scoreboard on the first link based on the first A-MPDU received over the second link; and the multi-link device sends a first block acknowledgment frame over the first link based on the start sequence number or the end sequence number of the scoreboard on the first link and the received second A-MPDU, where the first block acknowledgment frame is used to acknowledge a receiving status of the second A-MPDU.

According to the foregoing method, in a multi-link communication scenario, when a data transmit end sends, along a plurality of links, a plurality of A-MPDUs corresponding to a same TID to a data receive end, receiving devices of different links can correctly feed back receiving statuses of all MPDUs in the received A-MPDUs in this embodiment of this application.

Specifically, in this embodiment of this application, a scoreboard of a first receiving device keeps synchronous with a scoreboard of a receiving device of another link without using information in a reordering buffer, so that the first receiving device can process a received A-MPDU according to an existing scoreboard context update rule, and correctly record receiving statuses of all MPDUs in the A-MPDU based on a newly determined start sequence number or end sequence number of the scoreboard, and no information is incorrectly reported.

With reference to the first aspect, in some possible implementations of the first aspect, the method further includes: The multi-link device determines a start sequence number or an end sequence number of a scoreboard on the second link based on the first A-MPDU received over the second link; and the multi-link device sends a second block acknowledgment frame over the second link based on the start sequence number or the end sequence number of the scoreboard on the second link and the received first A-MPDU, where the second block acknowledgment frame is used to acknowledge a receiving status of the first A-MPDU.

With reference to the first aspect, in some possible implementations of the first aspect, a window size of the scoreboard on the first link is the same as a window size of the scoreboard on the second link.

With reference to the first aspect, in some possible implementations of the first aspect, the multi-link device includes a first receiving device on the first link and a second receiving device on the second link. That the multi-link device determines a start sequence number or an end sequence number of a scoreboard on the first link based on the first A-MPDU received over the second link includes: The first receiving device determines a start sequence number or an end sequence number of a scoreboard of the first receiving device based on a start sequence number or an end sequence number of a scoreboard of the second receiving device, where the start sequence number or the end sequence number of the scoreboard of the second receiving device corresponds to the first A-MPDU.

The first receiving device obtains an updated start sequence number or end sequence number of the scoreboard of the second receiving device (or the second receiving device is synchronized with the scoreboard of the first receiving device), so that in this embodiment of this application, the scoreboard of the first receiving device can be synchronized with the scoreboard of the second receiving device. In this way, in this embodiment of this application, the first receiving device can process the received A-MPDU according to the existing scoreboard context control update rule, and correctly record the receiving statuses of all the MPDUs in the A-MPDU based on the newly determined start sequence number or end sequence number of the scoreboard, and no information is incorrectly reported.

With reference to the first aspect, in some possible implementations of the first aspect, the multi-link device includes a first receiving device on the first link and a second receiving device on the second link. That the multi-link device determines a start sequence number or an end sequence number of a scoreboard on the first link based on the first A-MPDU received over the second link includes: The first receiving device determines a start sequence number or an end sequence number of a scoreboard of the first receiving device based on a start sequence number or an end sequence number of a common scoreboard of the multi-link device, where the start sequence number or the end sequence number of the common scoreboard of the multi-link device is determined based on the first A-MPDU.

The second receiving device records an updated start sequence number or end sequence number of the scoreboard in the common scoreboard, so that the first receiving device is synchronized with the scoreboard of the first receiving device by obtaining the start sequence number or the end sequence number of the common scoreboard. In this way, in this embodiment of this application, the first receiving device can process the received A-MPDU according to the existing scoreboard context update rule, and correctly record the receiving statuses of all the MPDUs in the A-MPDU based on the newly determined start sequence number or end sequence number of the scoreboard, and no information is incorrectly reported.

With reference to the first aspect, in some possible implementations of the first aspect, the multi-link device includes a first receiving device on the first link and a second receiving device on the second link. That the multi-link device determines a start sequence number or an end sequence number of a scoreboard on the first link based on the first A-MPDU received over the second link includes: The first receiving device receives a start sequence number sent by a sending device on the first link, where the start sequence number is coupled to the first A-MPDU; and the first receiving device determines a start sequence number or an end sequence number of a scoreboard of the first receiving device based on the start sequence number.

According to the foregoing technical solution, in this embodiment of this application, the first receiving device can update or be synchronized with the start sequence number or the end sequence number of the scoreboard of the first receiving device by receiving a start sequence number sent by a first sending device, so that the received A-MPDU can be processed according to the scoreboard context update rule, the receiving statuses of all the MPDUs in the A-MPDU can be correctly recorded based on the newly determined start sequence number or end sequence number of the scoreboard, and no information is incorrectly reported.

With reference to the first aspect, in some possible implementations of the first aspect, the start sequence number is carried in an add block acknowledgment request frame or a block acknowledgment request frame.

With reference to the first aspect, in some possible implementations of the first aspect, the multi-link device includes a second receiving device on the second link. The method further includes: The multi-link device sends indication information over the second link, where the indication information indicates that the second receiving device cannot be synchronized with a start sequence number or an end sequence number of a scoreboard of a receiving device of any link.

According to the foregoing technical solution, in this embodiment of this application, a first receiving device can update or be synchronized with a start sequence number or an end sequence number of a scoreboard of the first receiving device by receiving a start sequence number sent by a first sending device, so that the received A-MPDU can be processed according to the scoreboard context update rule, the receiving statuses of all the MPDUs in the A-MPDU can be correctly recorded based on the newly determined start sequence number or end sequence number of the scoreboard, and no information is incorrectly reported.

With reference to the first aspect, in some possible implementations of the first aspect, the first block acknowledgment frame of the first A-MPDU is sent before the second A-MPDU is received.

According to a second aspect, a multi-link device is provided. The multi-link device receives a second aggregated medium access control protocol data unit A-MPDU over a first link, and receives a first A-MPDU over a second link, where the first A-MPDU and the second A-MPDU have a same traffic identifier, and the first A-MPDU is received before the second A-MPDU. The multi-link device includes: a processing unit, configured to determine a start sequence number or an end sequence number of a scoreboard on the first link based on the first A-MPDU received over the second link, where the processing unit is further configured to determine a first acknowledgment frame based on the start sequence number or the end sequence number of the scoreboard on the first link and the received second A-MPDU, where the first block acknowledgment frame is used to acknowledge a receiving status of the second A-MPDU; and a transceiver unit, configured to send the first block acknowledgment frame over the first link.

With reference to the second aspect, in some possible implementations of the second aspect, the processing unit is configured to determine a start sequence number or an end sequence number of a scoreboard on the second link based on the first A-MPDU received over the second link. The processing unit is configured to determine a second block acknowledgment frame based on the start sequence number or the end sequence number of the scoreboard on the second link and the received first A-MPDU, where the second block acknowledgment frame is used to acknowledge a receiving status of the first A-MPDU. The transceiver unit is configured to send the second block acknowledgment frame over the second link.

With reference to the second aspect, in some possible implementations of the second aspect, a window size of the scoreboard on the first link is the same as a window size of the scoreboard on the second link.

With reference to the second aspect, in some possible implementations of the second aspect, the multi-link device includes a first communication apparatus on the first link and a second communication apparatus on the second link, and the first communication apparatus includes a processing module. The processing module is configured to determine a start sequence number or an end sequence number of a scoreboard of the first communication apparatus based on a start sequence number or an end sequence number of a scoreboard of the second communication apparatus. The start sequence number or the end sequence number of the scoreboard of the second communication apparatus corresponds to the first A-MPDU.

With reference to the second aspect, in some possible implementations of the second aspect, the multi-link device includes a first communication apparatus on the first link and a second communication apparatus on the second link, and the first communication apparatus includes a processing module. The processing module is configured to determine a start sequence number or an end sequence number of a scoreboard of the first communication apparatus based on a start sequence number or an end sequence number of a common scoreboard of the multi-link device. The start sequence number or the end sequence number of the common scoreboard of the multi-link device corresponds to the first A-MPDU.

With reference to the second aspect, in some possible implementations of the second aspect, the multi-link device includes a first communication apparatus on the first link and a second communication apparatus on the second link, and the first communication apparatus includes a processing module and a transceiver module. The transceiver module is configured to receive a start sequence number sent by a sending device on the first link, where the start sequence number is coupled to the first A-MPDU. The processing module is configured to determine a start sequence number or an end sequence number of a scoreboard of the first communication apparatus based on the start sequence number. The start sequence number is coupled to the first A-MPDU.

With reference to the second aspect, in some possible implementations of the second aspect, the start sequence number is carried in an add block acknowledgment request frame or a block acknowledgment request frame.

With reference to the second aspect, in some possible implementations of the second aspect, the multi-link device includes a second communication apparatus on the second link. The transceiver unit is configured to send indication information over the second link, where the indication information indicates that the second communication apparatus cannot be synchronized with a start sequence number or an end sequence number of a scoreboard of a communication apparatus of any link.

With reference to the second aspect, in some possible implementations of the second aspect, the first block acknowledgment frame of the first A-MPDU is sent before the second A-MPDU is received.

According to a third aspect, a computer-readable storage medium is provided. The computer storage medium stores program instructions, and when the program instructions are executed by a computer, the computer is enabled to perform the method according to any one of the first aspect and the possible implementations of the first aspect.

According to a fourth aspect, a computer program product is provided, including instructions. When the instructions are run on a computer, the computer is enabled to perform the method according to any one of the first aspect and the possible implementations of the first aspect.

### BRIEF DESCRIPTION OF DRAWINGS

FIG. 1 is a schematic diagram of an application scenario according to an embodiment of this application;
FIG. 2 is a schematic diagram of an association relationship between multi-link devices according to an embodiment of this application;
FIG. 3 is a schematic diagram of a scoreboard context control operation according to an embodiment of this application;
FIG. 4 is a schematic diagram in which a receiving device receives and feeds back an aggregated medium access control protocol data unit according to an embodiment of this application;
FIG. 5 is a schematic flowchart of a multi-link communication method according to an embodiment of this application;
FIG. 6 is a schematic flowchart of still another multi-link communication method according to an embodiment of this application;
FIG. 7 is a schematic flowchart of another multi-link communication method according to an embodiment of this application;
FIG. 8A and FIG. 8B are a schematic flowchart of yet another multi-link communication method according to an embodiment of this application;
FIG. 9 is a schematic diagram of a frame structure of indication information according to an embodiment of this application;
FIG. 10 is a schematic block diagram of a multi-link device according to an embodiment of this application; and
FIG. 11 is a schematic block diagram of another multi-link device according to an embodiment of this application.

### DESCRIPTION OF EMBODIMENTS

The following describes technical solutions of embodiments in this application with reference to accompanying drawings.

The technical solutions provided in embodiments of this application are applicable to a wireless local area network (wireless local area network, WLAN) scenario. For example, the technical solutions provided in embodiments of this application are applicable to an IEEE 802.11 system standard, for example, the 802.11a/b/g standard, the 802.11n standard, the 802.1 lac standard, the 802.11ax standard, or a next-generation standard, for example, the 802.1The standard or a further next-generation standard.

The technical solutions provided in embodiments of this application are applicable to a wireless local area network (wireless local area network, WLAN) scenario. For example, the technical solutions provided in embodiments of this application are applicable to an IEEE 802.11 system standard, for example, the 802.11a/b/g standard, the 802.11n standard, the 802.1 lac standard, the 802.11ax standard, or a next-generation standard, for example, the 802.1The standard or a further next-generation standard.

Although embodiments of this application are mainly described by using an example in which a WLAN network is deployed, especially a network to which the IEEE 802.11 system standard is applied, a person skilled in the art easily understands that various aspects in embodiments of this application may be extended to other networks that use various standards or protocols, for example, Bluetooth (bluetooth), a high performance radio local area network (high performance radio local area network, HIPERLAN), a wide area network (wide area network, WAN), a personal area network (personal area network, PAN), and other networks that are known or developed in the future. Therefore, regardless of a used coverage area and a used wireless access protocol, the various aspects provided in embodiments of this application are applicable to any suitable wireless network.

The technical solutions in embodiments of this application may be further applied to various communication systems, for example, a global system for mobile communication (global system for mobile communication, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunication system (universal mobile telecommunication system, UMTS), a worldwide interoperability for microwave access (worldwide interoperability for microwave access, WiMAX) communication system, a 5th generation (5th generation, 5G) system or a new radio (new radio, NR) system, a future 6th generation (6th generation, 6G) system, and a wireless local area network system such as an internet of things (internet of things, IoT) network or an internet of vehicles (vehicle to X, V2X).

The foregoing communication systems used in this application are merely examples for description, and are not limited thereto. A unified description is provided herein and details are not described below again.

A terminal in embodiments of this application may be user equipment (user equipment, UE), an access terminal, a subscriber unit, a subscriber station, a mobile station, a remote station, a remote terminal, a mobile device, a user terminal, a terminal, a wireless communication device, a user agent, or a user apparatus. The terminal may alternatively be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another processing device connected to a wireless modem, a vehicle-mounted device, a wearable device, a terminal in a 5G network, a terminal in a future 6G network, a terminal in a public land mobile network (public land mobile network, PLMN), or the like. This is not limited in embodiments of this application.

A network device in embodiments of this application may be a device configured to communicate with the terminal. The network device may be a base transceiver station (base transceiver station, BTS) in the global system for mobile communication (global system for mobile communication, GSM) or the code division multiple access (code division multiple access, CDMA) system, or may be a NodeB (NodeB, NB) in the wideband code division multiple access (wideband code division multiple access, WCDMA) system, or may be an evolved NodeB (evolved NodeB, eNB or eNodeB) in the LTE system, or may be a radio controller in a scenario of a cloud radio access network (cloud radio access network, CRAN). Alternatively, the network device may be a relay station, an access point, a vehicle-mounted device, a wearable device, a network device in the 5G network, a network device in the future 6G network, a network device in the PLMN network, or the like. This is not limited in embodiments of this application.

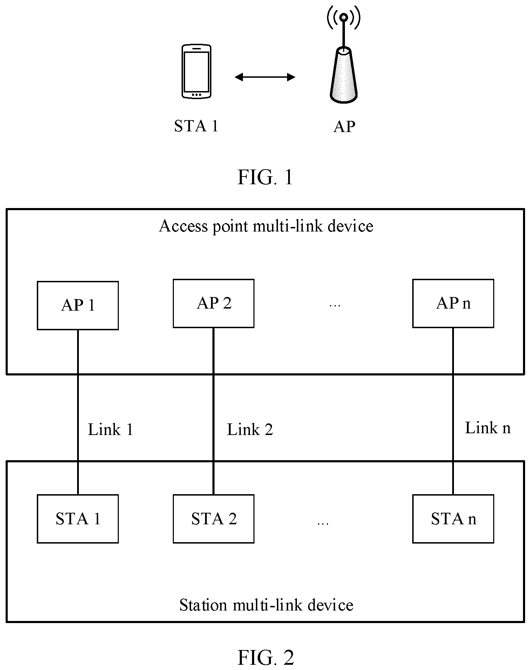

FIG. 1 is a schematic diagram of an application scenario according to this application. In FIG. 1, an access point (access point, AP) may be a communication server, a router, or a switch, or may be any one of the foregoing network devices. A station (station, STA) may be a mobile phone or a computer, or may be any one of the foregoing terminals. This is not limited in embodiments of this application.

It should be understood that the technical solutions in embodiments of this application are applicable to communication between an AP and one or more STAs, are applicable to mutual communication between APs, and are applicable to mutual communication between STAs. For ease of description, embodiments of this application are described merely by using an example in which an AP communicates with one or more STAs. However, this description manner does not have any limitation on an actual application scope of the technical solutions of embodiments of this application. A unified description is provided herein and details are not described below again.

The access point may be an access point used by a terminal (such as a mobile phone) to access a wired (or wireless) network, and is mainly deployed at home, in a building, and in a campus. A typical coverage radius is tens of meters or more than 100 meters. Certainly, the access point may alternatively be deployed outdoors. The access point is equivalent to a bridge that connects the wired network and the wireless network. A main function of the access point is to connect various wireless network clients together and then connect the wireless network to the Ethernet. Specifically, the access point may be a terminal (such as a mobile phone) or a network device (such as a router) with a Wi-Fi chip. The access point may be a device that supports the 802.11be standard. Alternatively, the access point may be a device that supports a plurality of WLAN standards of the 802.11 family, such as 802.11ax, 802.1lac, 802.11n, 802.1lg, 802.11b, 802.11a, and a next generation of 802.1lbe. The access point in this application may be an HE AP or an EHT AP, or may be an access point applicable to a future-generation Wi-Fi standard.

The station may be a wireless communication chip, a wireless sensor, a wireless communication terminal, or the like, and may also be referred to as a user. For example, the station may be a mobile phone, a tablet computer, a set-top box, a smart television set, a smart wearable device, a vehicle-mounted communication device, a computer, or the like that supports a Wi-Fi communication function. Optionally, the station may support the 802.11be standard. Alternatively, the station may support WLAN standards of the 802.11 family, such as 802.11 ax, 802.11ac, 802.11n, 802.11g, 802.11b, 802.11a, and the next generation of 802.11be.

For example, the access point and the station may be devices used in the internet of vehicles, internet of things nodes, sensors, or the like in the internet of things (internet of things, IoT), smart cameras, smart remote controls, smart water or electricity meters, or the like in a smart home, sensors in a smart city, and the like.

A wireless communication system provided in embodiments of this application may be the WLAN or a cellular network. The method may be implemented by a communication device in the wireless communication system or a chip or a processor in the communication device. The communication device may be a wireless communication device that supports parallel transmission on a plurality of links, for example, a multi-link device (multi-link device, MLD). Compared with a device that supports only single-link transmission, the multi-link device has higher transmission efficiency and a higher throughput. The multi-link device includes one or more affiliated stations STAs (affiliated STA). The affiliated STA is a logical station and may operate on one link. The affiliated station may be an AP or a non-AP STA. For ease of description, in embodiments of this application, a multi-link device whose affiliated station is an AP may be referred to as a multi-link AP, a multi-link AP device, or an AP multi-link device (AP MLD). A multi-link device whose affiliated station is a non-AP STA may be referred to as a multi-link STA, a multi-link STA device, or a STA multi-link device (non-AP MLD).

FIG. 2 is a schematic diagram of an association relationship between multi-link devices according to an embodiment of this application. An AP MLD shown in FIG. 2 may include a plurality of APs, and a STA MLD may include a plurality of STAs. If the AP MLD needs to communicate with the STA MLD, each AP in the AP MLD needs to be associated with a corresponding STA in the STA MLD. As shown in FIG. 2, an AP 1 in the AP MLD is associated with a STA 1 in the STA MLD and operates on a link 1. An AP 2 in the AP MLD is associated with a STA 2 in the STA MLD and operates on a link 2. An AP n in the AP MLD is associated with a STA n in the STA MLD and operates on a link n. In this way, each AP in the AP MLD may establish, on a respective link, a connection to the corresponding STA in the STA MLD, to perform multi-link communication between the two MLDs.

To better understand the technical solutions disclosed in embodiments of this application, the following briefly describes some technical terms in embodiments of this application.

### First, block acknowledgment (block acknowledgment, BA)

The 802.11n protocol defines the BA mechanism, and the BA mechanism aggregates a plurality of "acknowledgment (acknowledgment)" into one frame to improve channel efficiency.

The BA mechanism is started by exchanging an add block acknowledgment (add BA, ADDBA) request (request) frame and an ADDBA response (response) frame. For example, a data transmit end (originator) (referred to as a "transmit end" for short) sends an ADDBA request frame to a data receive end (recipient) (referred to as a "receive end" for short), and the receive end returns an ADDBA response frame to the transmit end. According to the foregoing procedure, a BA mechanism (or a "BA session") between the transmit end and the receive end is successfully established. Then, the transmit end sends a plurality of medium access control protocol data units (MAC protocol data unit, MPDU) to the receive end. The plurality of MPDUs sent by the transmit end to the receive end are aggregated into one aggregated medium access control protocol data unit (aggregated MPDU, A-MPDU). The transmit end sends a BA request (BA request, BAR) frame to the receive end. The receive end returns a BA frame to the transmit end, to acknowledge receiving statuses of all the MPDUs in the A-MPDU sent by the transmit end.

It should be understood that the transmit end establishes a window, that is, (WinStart_{O}, WinSize_{O}), for each receiver address (receiver address, RA) or traffic identifier (traffic identifier, TID) in an aggregation procedure, to control a quantity of MPDUs included in one A-MPDU. One A-MPDU includes a maximum of 1024 MPDUs. However, a maximum quantity of MPDUs included in one A-MPDU may be changed according to a future standard.

Currently, there are two BA mechanisms: full-state BA mechanism and partial state BA mechanism. The former needs to maintain a scoreboard state during an entire BA session. Therefore, a receive end needs to maintain all active BA session states, which increases load of the receive end. The latter only needs to buffer a recently active BA session state, which can ensure that a memory used to store the BA state can be repeatedly used by different BA sessions, and can implement backward compatibility with the full-state BA mechanism.

Second, scoreboard context control (scoreboard context control) operation.

It should be understood that a receiver (which is a non-AP in a downlink scenario or an AP in an uplink scenario) that implements a full-state operation (full-state operation) for a high throughput immediate block acknowledgment agreement (high throughput immediate block ack agreement) maintains a block acknowledgment record (BA record) for the protocol according to the following rules:

The receiver maintains one block acknowledgment record. The record includes a bitmap indexed by a sequence number; a start sequence number of a 12-bit unsigned integer, namely, WinStart_{R}, used to indicate a lowest sequence number position in the bitmap; WinEnd_{R}, used to indicate a highest sequence number in a current transmission window; and a maximum window size, namely, WinSize_{R}, set to a smaller value in a bitmap length (bitmap length (802.11ax protocol)) and a buffer size field of an ADDBA response frame for establishing a block acknowledgment protocol.

For ease of description, in embodiments of this application, an example in which a scoreboard of a receiving device is defined by three parameters WinStart_{R}, WinSize_{R}, and WinEnd_{R} is used for description. WinStart_{R} indicates a start sequence number of the scorecard, WinSize_{R} indicates a window size of the scorecard, and WinEnd_{R} indicates an end sequence number of the scorecard.

After receiving an A-MPDU sent by a transmit end, a receive end performs de-aggregation control (de-aggregation control) on the A-MPDU, to obtain a plurality of MPDUs. Each MPDU in the A-MPDU has a sequence number (sequence number, SN), and the SN indicates a sequence of each MPDU in the A-MPDU. Specifically, if fragmentation and reassembly are not used, the SN is a value of a sequence number subfield of a received data frame. If fragmentation and reassembly are used, the SN is a value of an MPDU sequence number subfield of a received data frame.

The receive end performs a scoreboard context control operation on each MPDU, delivers received MPDUs to a receive reordering buffer (receive reordering buffer) after scoring, sorts the MPDUs based on SN sequences, and delivers a correctly received MPDU to an upper layer. If an MPDU that is not successfully received appears in a reordering process, an SN corresponding to the MPDU is denoted as WinStart_{B}, and all MPDUs that are successfully received in sequence before the SN are delivered to the upper layer. For an MPDU after the SN, only after receiving the MPDU corresponding to the SN, the receive end can deliver, to the upper layer, the MPDU and an MPDU that is correctly received in sequence.

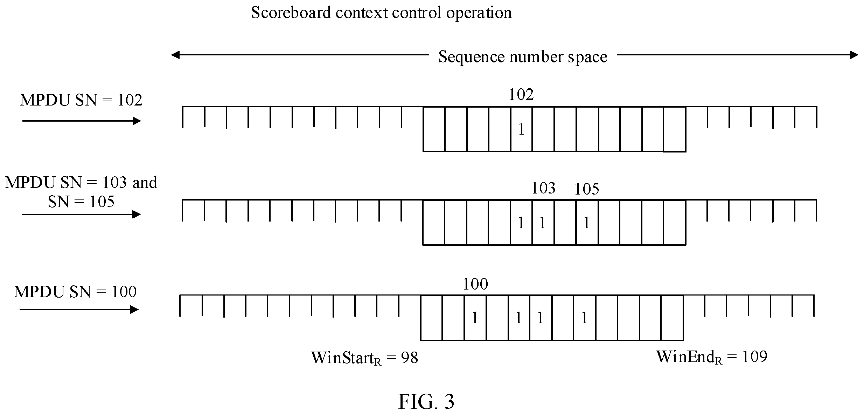

FIG. 3 is a schematic diagram of a scoreboard context control operation according to an embodiment of this application. Details are shown in FIG. 3.

For example, a receive end de-aggregates one A-MPDU and obtains four MPDUs whose SNs are respectively 102, 103, 105, and 100. The receive end marks one 1 in a bit position corresponding to the SN in a scoreboard, where " 1" indicates that the MPDU corresponding to the SN is correctly received, forms a bitmap (bitmap) based on a score result, and places the bitmap in a BA frame as an acknowledgment of the corresponding A-MPDU. In FIG. 3, WinStart_{R} = 98, WinSize_{R} = 11, and WinEnd_{R} = 109.

It should be understood that one sequence number space may include 4096 SNs, and a window of the scoreboard may move in the sequence number space.

As a BA session is established, the scoreboard is initialized. WinStart_{R} may be set to a start sequence number (start sequence number, SSN) provided by an ADDBA request frame. When an MPDU arrives, if an SN of the MPDU falls within the space indicated by the scoreboard, the receive end uses the SN to index the scoreboard and records that the MPDU is correctly received. If the SN is outside the space indicated by the scorecard but in a range of WinEnd_{R} to WinStart_{R} + 2¹¹ (within half of the sequence number space), the receive end moves the window of the scorecard rightwards (which may be understood as: the receive end changes WinEnd_{R} to make WinEnd_{R} be equal to the SN) until a new SN is included on the rightmost edge of the window of the scorecard. When a BAR frame arrives, the window of the scoreboard moves rightwards, to make WinStart_{R} be equal to an SSN provided by the BAR frame, and a BA frame carrying recorded content of the scoreboard is returned.

Specifically, when receiving an MPDU carrying an SN, the receive end checks whether the MPDU has a scoreboard record of a corresponding BA session. The BA session is identified by a transmitter address (transmitter address, TA) and a TID. If there is no scoreboard record, the receive end creates a scoreboard for the BA session, and may reuse a memory of another session. If there is a scoreboard record, the receive end may determine, by using the following three cases (which may be understood as scoreboard context control update rules), whether a window of the scoreboard needs to be moved (for details, refer to the standard chapter number: 802.11 REVme_D1.0 10.25.6 HT-immediate block ack extensions):
1) WinStart_{R} ≤ SN ≤ WinEnd_{R};
2) WinEnd_{R} < SN < WinStart_{R} + 2¹¹; and
3) WinStart_{R} + 2¹¹ ≤ SN < WinStart_{R}.

For the first case, the receive end marks 1 in a bit position corresponding to the SN, to indicate that the MPDU is correctly received. For the second case, the access end moves the window of the scoreboard rightwards, so that the rightmost edge of the window of the scoreboard includes the SN, marks all bit positions between WinEnd_{R} and the SN of the MPDU as "0", and assigns the SN of the MPDU to WinEnd_{R} of the scoreboard. For the third case, the receive end does not perform any operation, that is, does not feed back a receiving status of the MPDU.

It should be understood that, in a multi-link communication scenario shown in FIG. 2, each link maintains respective scoreboard context control. This may be understood as that each receiving device has scoreboard context control. For ease of description, scoreboard context control of each receiving device is collectively referred to as a scoreboard of the receiving device in the following, and there is a common scoreboard of an MLD. The receiving device of each link uses respective scoreboard context control to feed back a receiving status of an MPDU received by the receiving device. The common scoreboard may be used to record parameter information of a scoreboard of another receiving device, for example, a start sequence number and/or an end sequence number of the scoreboard of each receiving device, or information recording the scoreboards of all the receiving devices. In this embodiment of this application, the common scoreboard may be maintained by some or all of receiving devices of the MLD, and each receiving device may record information about a scoreboard of the receiving device on the common scoreboard.

In the multi-link communication scenario shown in FIG. 2, the AP MLD may send, along a plurality of links, a plurality of A-MPDUs corresponding to a same TID to the STAMLD. This may cause a receiving device (the receiving device is a STA in a downlink scenario, and the receiving device is an AP in an uplink scenario) to fail to correctly feed back receiving statuses of all MPDUs in the received A-MPDUs.

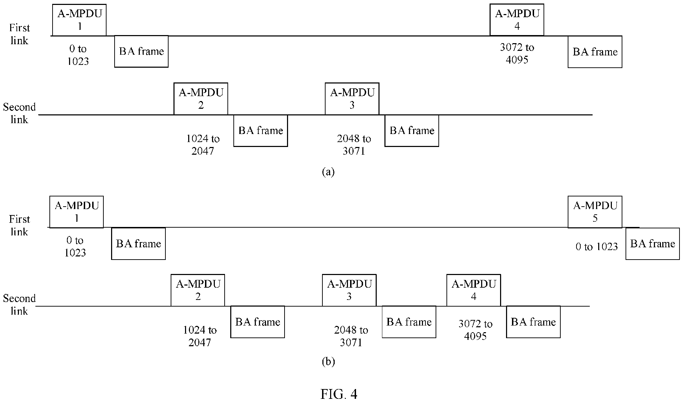

For example, a same TID corresponds to four A-MPDUs, an aggregation length of each A-MPDU is 1024, in other words, each A-MPDU includes 1024 MPDUs, and an acknowledgment policy of each A-MPDU is immediate block acknowledgment. A first STA receives a first A-MPDU, a second STA receives a second A-MPDU and a third A-MPDU, and the first STA receives a fourth A-MPDU. SNs of the first A-MPDU are 0 to 1023, SNs of the second A-MPDU are 1024 to 2047, SNs of the third A-MPDU are 2048 to 3071, and SNs of the fourth A-MPDU are 3072 to 4095. After the first STA sends a BA frame corresponding to the first A-MPDU, WinStart_{R} of a scoreboard of the first STA is equal to 0, and WinEnd_{R} is equal to 1023. The SNs of the fourth A-MPDU are 3072 to 4095; and SN is equal to 3072 and greater than WinEnd_{R} (1023), and falls inside 0 + 2048 ≤ SN < 0. This causes the first STA to fail to correctly feed back receiving statuses of all MPDUs in the fourth A-MPDU. For details, refer to FIG. 4(a).

Alternatively, a same TID corresponds to five A-MPDUs, an aggregation length of each A-MPDU is 1024, and an acknowledgment policy of each A-MPDU is immediate block acknowledgment. A first STA receives a first A-MPDU, a second STA receives a second A-MPDU, a third A-MPDU, and a fourth A-MPDU, and the first STA receives a fifth A-MPDU. SNs of the first A-MPDU are 0 to 1023, SNs of the second A-MPDU are 1024 to 2047, SNs of the third A-MPDU are 2048 to 3071, SNs corresponding to the fourth A-MPDU are 3072 to 4095, and SNs of the fifth A-MPDU are 0 to 1023. After the first STA sends a BA frame corresponding to the first A-MPDU, WinStart_{R} of a scoreboard of the first STA is equal to 0, and WinEnd_{R} is equal to 1023. When all MPDUs in the first A-MPDU are successfully received, the SNs of the fifth A-MPDU are still 0 to 1023, and the SNs of the fifth A-MPDU actually belong to a new record cycle. When the first STA has recorded receiving statuses of all the MPDUs in the first A-MPDU, and all the MPDUs are successfully received, all corresponding bit positions in the scoreboard of the first STA are 1. Some MPDUs in the fifth A-MPDU are incorrectly received. Because bit position records in BA corresponding to SNs of the some MPDUs are still 1, the first STA cannot correctly feed back the some MPDUs that are incorrectly received. For details, refer to FIG. 4(b).

FIG. 4 is a schematic diagram in which a receiving device receives and feeds back an aggregated medium access control protocol data unit according to an embodiment of this application. For specific content, refer to FIG. 4.

As specified in the conventional technology, the first STA may update the scoreboard of the first STA by using information in a reordering buffer. When the first STA receives an A-MPDU and records a receiving status of the A-MPDU, an SN of the A-MPDU is in a range of WinStart_{R} + 2¹¹ ≤ SN < WinStart_{R}, and does not meet WinStart_{B} + 2¹¹ ≤ SN < WinStart_{B} (for details, refer to a standard chapter number: 802.11 REVme_D1.0 10.25.6.6 Receive reordering buffer control operation), the scoreboard of the first STA is maintained according to a scoreboard context control update rule obtained when the SN is in a range of WinEnd_{R} < SN < WinStart_{R} + 2¹¹. If the first STA is incapable of updating the scoreboard of the first STA by using the information in the reordering buffer, the first STA needs to use the partial state BA mechanism and record the buffered scoreboard at the following time points and discard the buffered scoreboard, to release an occupied resource:
1) after the BA frame is sent and before scoreboard context control of a next received A-MPDU that belongs to a same transmit end and a same TID as the BA frame is processed; and
2) before scoreboard context control of a next received A-MPDU that is not sent at an end of a current TXOP and belongs to a same transmit end and a same TID as the BA frame is processed at the end of the current transmission opportunity (transmission opportunity, TXOP) and in a new TXOP.

However, in the conventional technology, a problem that when the first STA receives the fifth A-MPDU, the first STA cannot correctly feed back a receiving status of the fifth A-MPDU cannot be resolved. In addition, the conventional technology requires that the first STA has a capability of updating the scoreboard context control of the first STA by using the information in the reordering buffer. This increases a capability workload of the station.

In view of the foregoing technical problem, embodiments of this application provide a multi-link communication method and a communication apparatus, so that in a multi-link communication scenario, when a data transmit end sends, along a plurality of links, a plurality of A-MPDUs corresponding to a same TID to a same data receive end, it can be ensured that receiving devices of different links can correctly feed back receiving statuses of all MPDUs in the received A-MPDUs.

It should be understood that the technical solutions disclosed in embodiments of this application are applicable to an uplink communication scenario and a downlink communication scenario. For ease of description, in embodiments of this application, a receiving device is a data receive end, and the receiving device is an AP in the AP MLD, or may be a STA (a non-AP) in the STA MLD. In embodiments of this application, a sending device is a data transmit end, and the sending device is an AP in the AP MLD, or may be a STA (a non-AP) in the STA MLD. Further, a first receiving device and a first sending device operate on a first link, and a second receiving device and a second sending device operate on a second link. For the first link and the second link, refer to the foregoing descriptions.

It should be noted that a window of a scoreboard of a receiving device moves, which is equivalent to that a start sequence number and an end sequence number of the scoreboard of the receiving device change. The two expressions are used in the following at the same time, but the meanings are the same. A unified description is provided herein and details are not described below again.

It should be understood that, regardless of whether the window of the scoreboard moves or the start sequence number and the end sequence number change, essentially, a receiving party records receiving statuses of all MPDUs in a received A-MPDU according to the foregoing rule. For ease of description, in embodiments of this application, two representation manners of moving the window of the scoreboard or changing the start sequence number and the end sequence number are used, but other representation manners that are essentially the same but in different forms are not excluded.

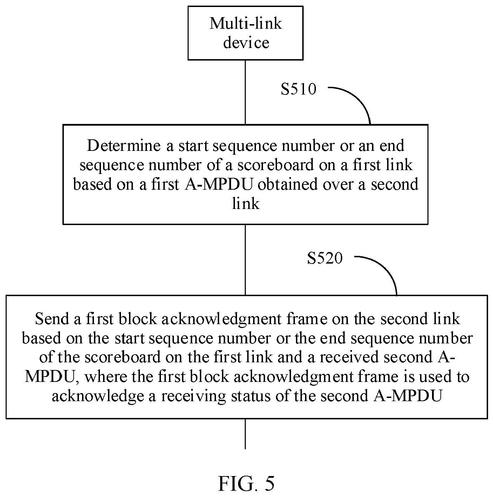

With reference to FIG. 5 to FIG. 8B, the following describes the multi-link communication method provided in embodiments of this application.

FIG. 5 is a schematic flowchart of a multi-link communication method according to an embodiment of this application. Details are shown in FIG. 5.

S510: A multi-link device determines a start sequence number or an end sequence number of a scoreboard on a first link based on a first A-MPDU received over a second link.

It should be understood that the multi-link device receives a second A-MPDU over the first link, and receives the first A-MPDU over the second link. The first A-MPDU and the second A-MPDU have a same traffic identifier, and the first A-MPDU is received before the second A-MPDU. The multi-link device may be the AP MLD shown in FIG. 2, or may be the STAMLD. The multi-link device includes a first receiving device on the first link and a second receiving device on the second link.

Specifically, the multi-link device determines a start sequence number or an end sequence number of a scoreboard of the first receiving device based on the first A-MPDU received by the second receiving device, where the start sequence number or the end sequence number of the scoreboard of the first receiving device corresponds to the first A-MPDU received over the second link.

It should be understood that the first A-MPDU is sent by a second sending device of a second MLD to a second receiving device of a first MLD along the second link, and the second A-MPDU is sent by a first sending device of the second MLD to a first receiving device of the first MLD along the first link. The first A-MPDU and the second A-MPDU are two A-MPDUs that have the same TID and that are sent by the second MLD to the first MLD along different links.

It should be understood that the first A-MPDU is first sent by the second sending device to the second receiving device, and a sending time of a first BA frame of the first A-MPDU is before a receiving time of the second A-MPDU. It should be understood that the receiving time may be understood as a "start receiving time".

Specifically, after the second receiving device receives the first A-MPDU sent by the second sending device, the second receiving device completes recording of receiving statuses of all MPDUs in the first A-MPDU according to an existing scoreboard context control operation rule.

It should be noted that a process in which the first receiving device determines the start sequence number or the end sequence number of the scoreboard of the first receiving device may be understood as a process in which the second receiving device is synchronized with the scoreboard of the first receiving device based on a scoreboard of the second receiving device. A specific synchronization manner is described below.

For ease of description, this embodiment of this application is described by using an example in which the first receiving device determines the start sequence number or the end sequence number of the scoreboard of the first receiving device. However, that the first receiving device determines the start sequence number or the end sequence number of the scoreboard of the first receiving device may also be considered as that the second receiving device is synchronized with the start sequence number or the end sequence number of the scoreboard of the first receiving device. A unified description is provided herein and details are not described below again.

For example, in a scenario shown in FIG. 4(a), the first A-MPDU is the A-MPDU 3, and the second A-MPDU is the A-MPDU 4. If the first receiving device cannot complete correspondence between the start sequence number or the end sequence number of the scoreboard of the first receiving device and the A-MPDU 3 before receiving the A-MPDU 4, the first receiving device cannot correctly record receiving statuses of all MPDUs in the A-MPDU 4.

It should be understood that, the first receiving device may obtain a start sequence number or an end sequence number of the scoreboard of the second receiving device, or obtain a start sequence number or an end sequence number of a common scoreboard of the first MLD, or receive an SSN sent by the first sending device, to complete correspondence between the start sequence number or the end sequence number of the scoreboard of the first receiving device and the first A-MPDU. The SSN is associated with the first A-MPDU, which is further described below.

It should be understood that the first receiving device and the second receiving device belong to the first MLD, and the first sending device and the second sending device belong to the second MLD.

It should be understood that the first A-MPDU causes a window of the scoreboard of the second receiving device to move, in other words, the first A-MPDU may change the start sequence number or the end sequence number of the scoreboard of the second receiving device.

In a possible implementation, the first A-MPDU does not cause the window of the scoreboard of the second receiving device to move, but the scoreboard of the first receiving device is still synchronized with the scoreboard of the second receiving device.

S520: The multi-link device sends a first block acknowledgment frame over the first link based on the start sequence number or the end sequence number of the scoreboard on the first link and the received second A-MPDU, where the first block acknowledgment frame is used to acknowledge a receiving status of the second A-MPDU.

Specifically, the first receiving device of the multi-link device records, based on the determined start sequence number or end sequence number of the scoreboard of the first receiving device, receiving statuses of all MPDUs in the second A-MPDU received by the first receiving device, and sends, after recording is completed, a second block acknowledgment frame to a sending device over the first link, where the second block acknowledgment frame is used to acknowledge the receiving status of the second A-MPDU.

It should be understood that the first receiving device may process the second A-MPDU based on the determined start sequence number or end sequence number of the scoreboard, and correctly record the receiving statuses of all the MPDUs in the second A-MPDU.

It should be understood that the first A-MPDU is a previous A-MPDU of the second A-MPDU, or it may be understood that the first A-MPDU is received before the second A-MPDU, and the first A-MPDU and the second A-MPDU have the same TID. Although the first receiving device does not receive the first A-MPDU, the start sequence number or the end sequence number of the scoreboard of the first receiving device corresponds to the first A-MPDU. In this way, the first receiving device can correctly feed back the receiving statuses of all the MPDUs in the second A-MPDU according to an existing scoreboard context control update rule.

It should be noted that a window size of the scoreboard of the first receiving device is the same as a window size of the scoreboard of the second receiving device.

It should be understood that the first receiving device is any receiving device in the first MLD, and the second receiving device is any receiving device in the first MLD. The first sending device is any sending device in the second MLD, the second sending device is also any sending device in the second MLD, the first receiving device and the first sending device operate on the first link, and the second receiving device and the second sending device operate on the second link.

Alternatively, before receiving the second A-MPDU, the first receiving device needs to determine a start sequence number or an end sequence number of a scoreboard corresponding to the first A-MPDU.

According to the foregoing method, in a multi-link communication scenario, when a data transmit end sends, along a plurality of links, a plurality of A-MPDUs corresponding to a same TID to a data receive end, receiving devices of different links can correctly feed back receiving statuses of all MPDUs in the received A-MPDUs in this embodiment of this application.

Specifically, in this embodiment of this application, the scoreboard of the first receiving device keeps synchronous with a scoreboard of a receiving device of another link without using information in a reordering buffer, so that the first receiving device can process a received A-MPDU according to an existing scoreboard context update rule, and correctly record receiving statuses of all MPDUs in the A-MPDU based on a newly determined start sequence number or end sequence number of the scoreboard, and no information is incorrectly reported.

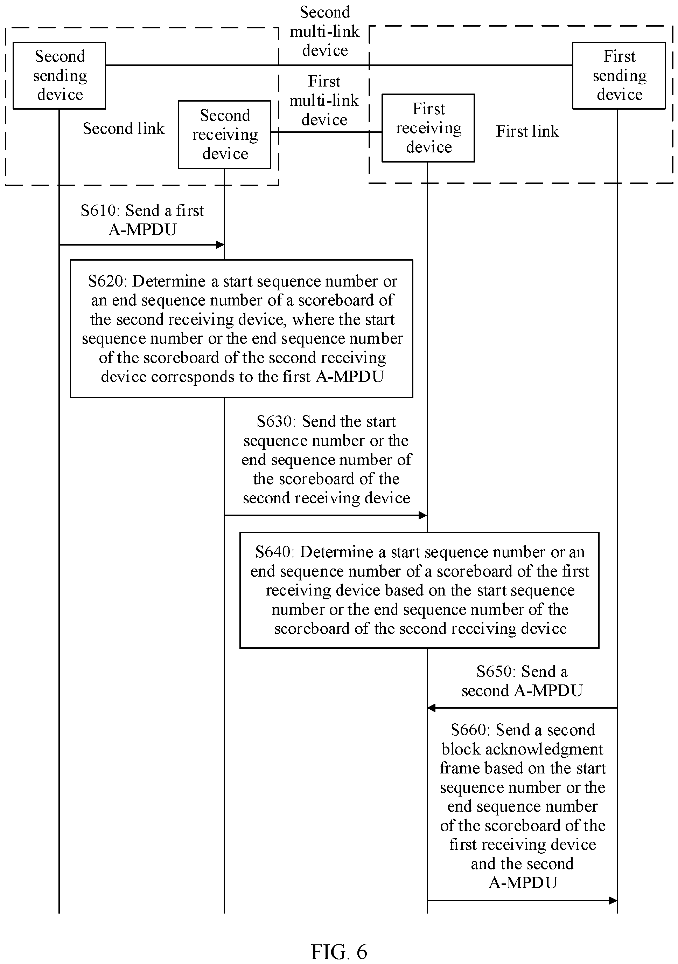

The following further describes the technical solution shown in FIG. 5 with reference to FIG. 6 to FIG. 8B.

FIG. 6 is a schematic flowchart of still another multi-link communication method according to an embodiment of this application. The method includes the following steps.

S610: A second sending device sends a first A-MPDU to a second receiving device.

Correspondingly, the second receiving device receives the first A-MPDU sent by the second sending device.

It should be understood that the second receiving device belongs to a first MLD, and the second sending device belongs to a second MLD. The second receiving device and the second sending device operate on a second link between the first MLD and the second MLD.

It should be understood that the first A-MPDU may be any A-MPDU sent by the second sending device to the second receiving device, or may be one of a plurality of A-MPDUs sent by the second sending device to the second receiving device.

S620: The second receiving device determines a start sequence number or an end sequence number of a scoreboard of the second receiving device, where the start sequence number or the end sequence number of the scoreboard of the second receiving device corresponds to the first A-MPDU.

Specifically, the second receiving device receives the first A-MPDU and de-aggregates the first A-MPDU to obtain a plurality of MPDUs, where each MPDU has one SN. The second receiving device performs scoreboard context control operations on these MPDUs. If SNs of these MPDUs belong to: WinStartR ≤ SN ≤ WinEndR, a window of the scoreboard of the second receiving device does not need to move, and the second receiving device needs to maintain the scoreboard of the second receiving device only according to a first rule of a scoreboard context control update rule. If the SNs of these MPDUs belong to: WinEnd_{R} < SN < WinStart_{R} + 2¹¹, the window of the scoreboard of the second receiving device gradually moves in a receiving process until receiving statuses of all the MPDUs in the first A-MPDU are recorded.

It should be understood that the start sequence number or the end sequence number of the scoreboard of the second receiving device corresponds to the first A-MPDU, which indicates that the scoreboard of the second receiving device can correctly record the receiving statuses of all the MPDUs in the first A-MPDU.

It should also be understood that correspondence between the start sequence number or the end sequence number of the scoreboard of the second receiving device and the first A-MPDU may be understood as: The SNs of all the MPDUs in the first A-MPDU belong to WinEnd_{R} < SN < WinStart_{R} + 2¹¹. Therefore, the second receiving device can correctly record the receiving statuses of all the MPDUs in the first A-MPDU.

It should be understood that a window size of the scoreboard of the second receiving device may cover all MPDUs included in one A-MPDU. Therefore, the end sequence number of the scoreboard of the second receiving device is equal to an SN of a last MPDU in the first A-MPDU, and whether the start sequence number of the scoreboard of the second receiving device needs to be equal to a first MPDU in the first A-MPDU is not limited.

Optionally, the second receiving device sends a first block acknowledgment frame to the second sending device, where the first block acknowledgment frame is used to acknowledge a receiving status of the first A-MPDU.

S630: The second receiving device sends the start sequence number or the end sequence number of the scoreboard of the second receiving device to the first receiving device.

Correspondingly, the first receiving device receives the start sequence number or the end sequence number of the scoreboard of the second receiving device that is sent by the second receiving device.

It should be understood that, for example, the first A-MPDU causes the window of the scoreboard of the second receiving device to move, in other words, the first A-MPDU may change the start sequence number or the end sequence number of the scoreboard of the second receiving device. Certainly, the window of the scoreboard of the second receiving device may not move.

For example, before the first A-MPDU is received, WinStart_{R} of the scoreboard of the second receiving device is SN#A, and WinEnd_{R} is SN#B. After the first A-MPDU is received, WinStart_{R} of the scoreboard of the second receiving device is SN#C, and WinEnd_{R} is SN#D. SN#C is greater than SN#A, and SN#D is greater than SN#B. Therefore, the first A-MPDU causes the window of the scoreboard of the second receiving device to move.

In another example, SNs of the first A-MPDU are 1024 to 2047. Before the first A-MPDU is received, WinStart_{R} of the scoreboard of the second receiving device is equal to 0, and WinEnd_{R} is equal to 1023. The first A-MPDU causes the window of the scoreboard of the second receiving device to move or change. For example, after the first A-MPDU is received, WinStart_{R} of the scoreboard of the second receiving device is equal to 1024, and WinEnd_{R} is equal to 2047.

It should be understood that, because the first A-MPDU causes the window of the scoreboard of the second receiving device to move, to ensure that a receiving device of another link can correctly feed back a receiving status of an A-MPDU received by the receiving device, the second receiving device is synchronized with the start sequence number or the end sequence number of the scoreboard corresponding to the first A-MPDU to the receiving device of the another link or a common scoreboard of an MLD, for example, the first receiving device.

It should be understood that, that the second receiving device sends the start sequence number or the end sequence number of the scoreboard of the second receiving device to the first receiving device may be before the second receiving device sends the first BA frame to the second sending device, or may be after sending the first BA frame and before processing scoreboard context control of a next received A-MPDU that belongs to a same transmit end and a same TID as the first BA frame, or may be before the second receiving device processes, at an end of a current TXOP and in a new TXOP, a next received A-MPDU that is not sent at the end of the current TXOP and that belongs to a same transmit end and a same TID as the first BA frame. The first BA frame is sent by the second receiving device to the second sending device, and is used to acknowledge the receiving statuses of all the MPDUs in the first A-MPDU. It should be understood that in this embodiment of this application, an acknowledgment policy of each A-MPDU is immediate block acknowledgment. A unified description is provided herein and details are not described below again.

It should be understood that both the second receiving device and the first receiving device belong to the first MLD, and the start sequence number or the end sequence number that is of the scoreboard of the second receiving device and that is sent by the second receiving device to the first receiving device is not transmitted through an air interface, but is transmitted by using an internal information exchange manner between the first receiving device and the second receiving device, For example, transmission is performed between low MAC of the first receiving device and low MAC of the second receiving device, or between low MAC and high MAC of the first receiving device.

It should be noted that the first A-MPDU is sent by the second MLD to the first MLD along the second link, and the second A-MPDU is sent by the second MLD to the first MLD along the first link. A sending time of the first BA frame of the first A-MPDU is before a receiving time of the second A-MPDU.

It should be further understood that a process in which the second receiving device sends the start sequence number or the end sequence number of the scoreboard of the second receiving device to the first receiving device may be understood as a process in which the second receiving device is synchronized with a scoreboard of the first receiving device.

S640: The first receiving device determines a start sequence number or an end sequence number of the scoreboard of the first receiving device based on the start sequence number or the end sequence number of the scoreboard of the second receiving device.

It should be understood that the first receiving device is synchronized with the start sequence number or the end sequence number of the scoreboard of the first receiving device based on the start sequence number or the end sequence number of the scoreboard of the second receiving device.

For example, when the second receiving device sends the start sequence number of the scoreboard of the second receiving device to the first receiving device, after changing the start sequence number of the scoreboard of the first receiving device, the first receiving device determines the end sequence number of the scoreboard of the first receiving device according to WinStart_{R} = WinEnd_{R} - WinSize_{R} + 1. If the second receiving device sends the end sequence number of the scoreboard of the second receiving device to the first receiving device, after changing the end sequence number of the scoreboard of the first receiving device, the first receiving device determines the start sequence number of the scoreboard of the first receiving device according to the foregoing formula.

In an example of S630, the second receiving device sends the start sequence number and the end sequence number of the scoreboard of the second receiving device to the first receiving device. In this way, the first receiving device may directly determine the start sequence number and the end sequence number of the scoreboard of the first receiving device based on the start sequence number and the end sequence number that are of the scoreboard of the second receiving device and that are sent by the second receiving device.

It should be understood that a window size of the scoreboard of the first receiving device is the same as the window size of the scoreboard of the second receiving device. In this way, although the second receiving device sends the start sequence number or the end sequence number of the scoreboard to the first receiving device, the first receiving device may also be synchronized with the scoreboard of the second receiving device.

It should be understood that, if a first sending device sends the second A-MPDU to the first receiving device, the first receiving device obtains the start sequence number or the end sequence number that is of the scoreboard of the second receiving device and that is sent by the second receiving device before the first receiving device receives the second A-MPDU, in other words, the first receiving device needs to update or be synchronized with the start sequence number or the end sequence number of the scoreboard of the first receiving device before the first receiving device receives the second A-MPDU. That is, a start receiving time of the second A-MPDU is later than the sending time of the first BA frame of the first A-MPDU.

S650: The first sending device sends the second A-MPDU to the first receiving device.

Correspondingly, the first receiving device receives the second A-MPDU sent by the first sending device.

S660: The first receiving device sends a second block acknowledgment frame to the first sending device based on the start sequence number or the end sequence number of the scoreboard of the first receiving device and the second A-MPDU, where the second block acknowledgment frame is used to acknowledge the second A-MPDU.

Specifically, the first receiving device records receiving statuses of all MPDUs in the second A-MPDU based on a newly determined start sequence number or end sequence number of the scoreboard. The first A-MPDU and the second A-MPDU are two adj acent A-MPDUs that have a same TID and that are transmitted on different links. Before the first receiving device receives the second A-MPDU, the start sequence number or the end sequence number of the scoreboard of the first receiving device corresponds to the first APDU. In this way, the first receiving device can correctly record the receiving statuses of all the MPDUs in the second A-MPDU.

Specifically, after completing recording the receiving statuses of all the MPDUs in the second A-MPDU by using the newly determined start sequence number or end sequence number of the scoreboard, the first receiving device sends the second block acknowledgment frame to the first sending device, where the second block acknowledgment frame is used to acknowledge the second A-MPDU.

In this way, the first receiving device records, based on the newly determined start sequence number or end sequence number of the scoreboard, the receiving statuses of all the MPDUs in the A-MPDU received by the first receiving device. In this embodiment of this application, the first receiving device can correctly record the receiving statuses of all the MPDUs in the A-MPDU, and send the corresponding block acknowledgment frame to the first sending device, so that the first sending device determines the receiving statuses of all the MPDUs in the second A-MPDU sent by the first sending device.

Correspondingly, the first sending device receives the second block acknowledgment frame (which may be understood as an acknowledgment frame) sent by the first receiving device.

It should be understood that the second A-MPDU and the first A-MPDU have the same TID, and the first A-MPDU is a previous A-MPDU of the second A-MPDU. However, the first A-MPDU is transmitted on the second link, and the second A-MPDU is transmitted on the first link. The receiving time of the second A-MPDU is later than the sending time of the first BA frame of the first A-MPDU.

It should be understood that, because the start sequence number or the end sequence number of the scoreboard of the first receiving device corresponds to the first A-MPDU, the first receiving device may still correctly record the receiving statuses of all the MPDUs in the second A-MPDU according to the second rule of the foregoing scoreboard context control update rules, that is, WinEnd_{R} < SN < WinStart_{R} + 2¹¹.

Specifically, the first receiving device determines (or is synchronized with) the start sequence number or the end sequence number of the scoreboard of the first receiving device based on the start sequence number or the end sequence number that is of the scoreboard of the second receiving device and that is sent by the second receiving device and that corresponds to the first A-MPDU. Therefore, the first receiving device can correctly record the receiving statuses of all the MPDUs in the second A-MPDU sent by the first sending device.

It should be noted that a process in which the first receiving device is synchronized with the scoreboard of the first receiving device may be understood as being completed by the second receiving device.

According to the foregoing method, in a multi-link communication scenario, when a data transmit end sends, along a plurality of links, a plurality of A-MPDUs corresponding to a same TID to a data receive end, receiving devices of different links can correctly feed back receiving statuses of all MPDUs in the received A-MPDUs in this embodiment of this application.

The first receiving device obtains an updated start sequence number or end sequence number of the scoreboard of the second receiving device (or the second receiving device is synchronized with the scoreboard of the first receiving device), so that in this embodiment of this application, the scoreboard of the first receiving device can be synchronized with the scoreboard of the second receiving device. In this way, in this embodiment of this application, the first receiving device can process a received A-MPDU according to an existing scoreboard context control update rule, and correctly record receiving statuses of all MPDUs in the A-MPDU based on the newly determined start sequence number or end sequence number of the scoreboard, and no information is incorrectly reported.

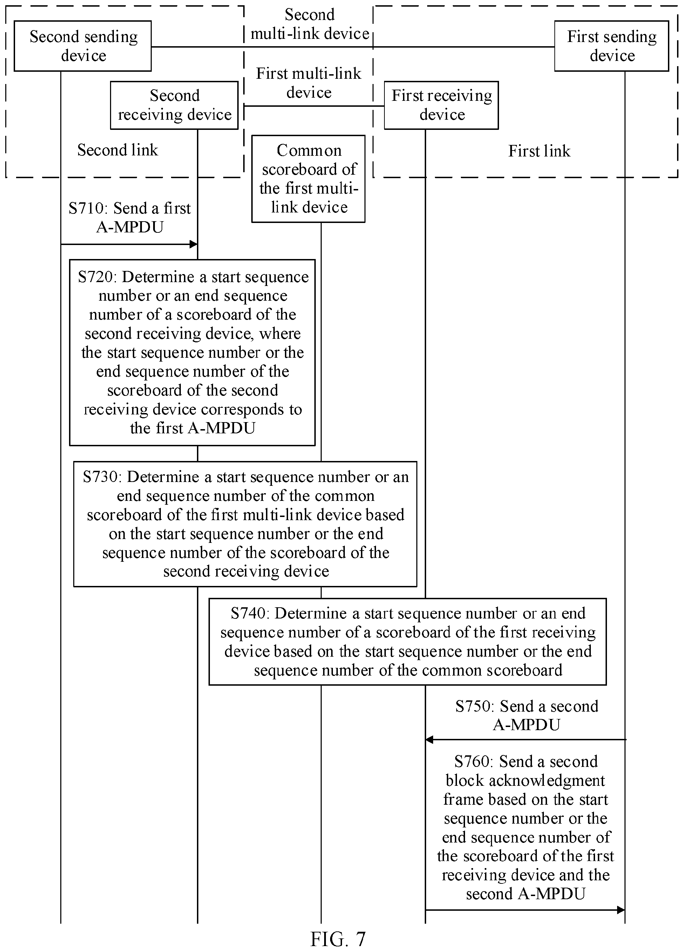

FIG. 7 is a schematic flowchart of another multi-link communication method according to an embodiment of this application. The method includes the following steps.

S710 and S720 are the same as the foregoing steps S610 and S620.

S730: The second receiving device determines a start sequence number or an end sequence number of a common scoreboard of a first multi-link device based on the start sequence number or the end sequence number of the scoreboard of the second receiving device.

It should be understood that, because the first A-MPDU causes a window of the scoreboard of the second receiving device to move (or the first A-MPDU may not cause the window of the scoreboard of the second receiving device to move, or the second receiving device may be synchronized with the common scoreboard of the first multi-link device), to ensure that a receiving device of another link can correctly record a receiving status of an A-MPDU received by the receiving device, the second receiving device is synchronized with the start sequence number or the end sequence number of the scoreboard corresponding to the first A-MPDU to the common scoreboard of the first MLD. For example, the second receiving device records a new start sequence number or an end sequence number of the scoreboard of the second receiving device in the common scoreboard.

It should be understood that, the second receiving device may determine the start sequence number or the end sequence number of the common scoreboard based on the start sequence number or the end sequence number of the scoreboard of the second receiving device before the second receiving device sends a first BA frame to the second sending device, or after sending the first BA frame and before processing scoreboard context control of a next received A-MPDU that belongs to a same transmit end and a same TID as the first BA frame, or before the second receiving device processes, at an end of a current TXOP and in a new TXOP, a next received A-MPDU that is not sent at the end of the current TXOP and that belongs to a same transmit end and a same TID as the first BA frame.

It should be understood that the common scoreboard of the first MLD may be maintained by all receiving devices of the first MLD, or may be maintained by a receiving device whose transmission window of a scoreboard changes. For example, after determining that the transmission window of the scoreboard moves or changes, the second receiving device may synchronize (which may be understood as: determining, changing, or adjusting) the start sequence number or the end sequence number of the common scoreboard. The receiving device of the another link may obtain the start sequence number or the end sequence number of the common scoreboard to synchronize (which may be understood as changing or determining) a scoreboard of the receiving device. For example, the receiving device may obtain the start sequence number or the end sequence number of the common scoreboard at a high MAC layer.

It should be understood that the common scoreboard may be configured to record common information used by all the receiving devices, for example, the updated start sequence number or end sequence number of the scoreboard of the second receiving device mentioned above, or may be other information.

In an example, an initial state of the common scoreboard of the first MLD may be blank, or initial start sequence numbers or end sequence numbers of scoreboards of all the receiving devices are recorded. However, some receiving devices may actively change or be synchronized with the start sequence number or the end sequence number of the common scoreboard based on whether start sequence numbers or end sequence numbers of scoreboards of the receiving devices change. This may cause the receiving device of the another link to be synchronized with the scoreboard of the receiving device by using the common scoreboard.

It should be further understood that, a process in which the second receiving device is synchronized with the common scoreboard of the first multi-link device may be understood as a process in which the second receiving device is synchronized with a scoreboard of a first receiving device by using the common scoreboard of the first multi-link device.

According to the foregoing solution, in this embodiment of this application, a receiving device of any link can correctly record receiving statuses of all MPDUs in a received A-MPDU according to a second rule of scoreboard context control update rules, without using information in a reordering buffer. This can reduce load of the receiving device.

S740: The first receiving device determines a start sequence number or an end sequence number of the scoreboard of the first receiving device based on the start sequence number or the end sequence number of the common scoreboard of the first multi-link device.

It should be understood that the first receiving device is synchronized with the scoreboard of the first receiving device based on the common scoreboard.

For example, when the common scoreboard records a start sequence number, after changing the start sequence number of the scoreboard of the first receiving device, the first receiving device determines the end sequence number of the scoreboard of the first receiving device according to WinStart_{R} = WinEnd_{R} - WinSize_{R} + 1. If the common scoreboard records an end sequence number, after changing the end sequence number of the scoreboard of the first receiving device, the first receiving device determines the start sequence number of the scoreboard of the first receiving device according to the foregoing formula.

It should be noted that, before receiving an A-MPDU, the first receiving device may pay attention to whether the common scoreboard changes. If it is determined that the start sequence number or the end sequence number of the common scoreboard changes, the first receiving device may be synchronized with the scoreboard of the first receiving device based on the common scoreboard.

In an example, the first receiving device may be synchronized with the scoreboard of the first receiving device directly based on the common scoreboard of the first multi-link device; or the first receiving device is synchronized with the scoreboard of the first receiving device based on the common scoreboard at a specific time or frequency; or the first multi-link device may be synchronized with the scoreboard of the first receiving device directly based on the common scoreboard.

In an example of S730, the second receiving device determines the start sequence number and the end sequence number of the common scoreboard of the first MLD based on the start sequence number and the end sequence number of the scoreboard of the second receiving device. In this way, the first receiving device may determine (synchronize) the start sequence number and the end sequence number of the scoreboard of the first receiving device based on the start sequence number and the end sequence number of the common scoreboard.

It should be understood that, if a first sending device sends a second A-MPDU to the first receiving device, the first receiving device obtains the start sequence number or the end sequence number of the scoreboard of the second receiving device that is sent by the second receiving device before the first receiving device receives the second A-MPDU, in other words, the first receiving device needs to update or be synchronized with the start sequence number or the end sequence number of the scoreboard of the first receiving device before the first receiving device receives the second A-MPDU. A sending time of the first BA frame of the first A-MPDU is before a receiving time of the second A-MPDU.

It should be noted that, that the first receiving device obtains the start sequence number or the end sequence number of the common scoreboard may be: the first receiving device sends request information to the first MLD (for example, at the high MAC layer), so that the first MLD sends the start sequence number or the end sequence number of the common scoreboard to the first receiving device; or may be: the first MLD directly sends the start sequence number or the end sequence number of the common scoreboard to the first receiving device after determining that the start sequence number or the end sequence number of the common scoreboard changes.

S750 and S760 are the same as the foregoing steps S650 and S660.

According to the foregoing method, in a multi-link communication scenario, when a data transmit end sends, along a plurality of links, a plurality of A-MPDUs corresponding to a same TID to a data receive end, receiving devices of different links can correctly feed back receiving statuses of all MPDUs in the received A-MPDUs in this embodiment of this application.

The second receiving device records an updated start sequence number or end sequence number of the scoreboard in the common scoreboard, so that the first receiving device is synchronized with the scoreboard of the first receiving device by obtaining the start sequence number or the end sequence number of the common scoreboard. In this way, in this embodiment of this application, the first receiving device can process a received A-MPDU according to an existing scoreboard context update rule, and correctly record receiving statuses of all MPDUs in the A-MPDU based on a newly determined start sequence number or end sequence number of the scoreboard, and no information is incorrectly reported.

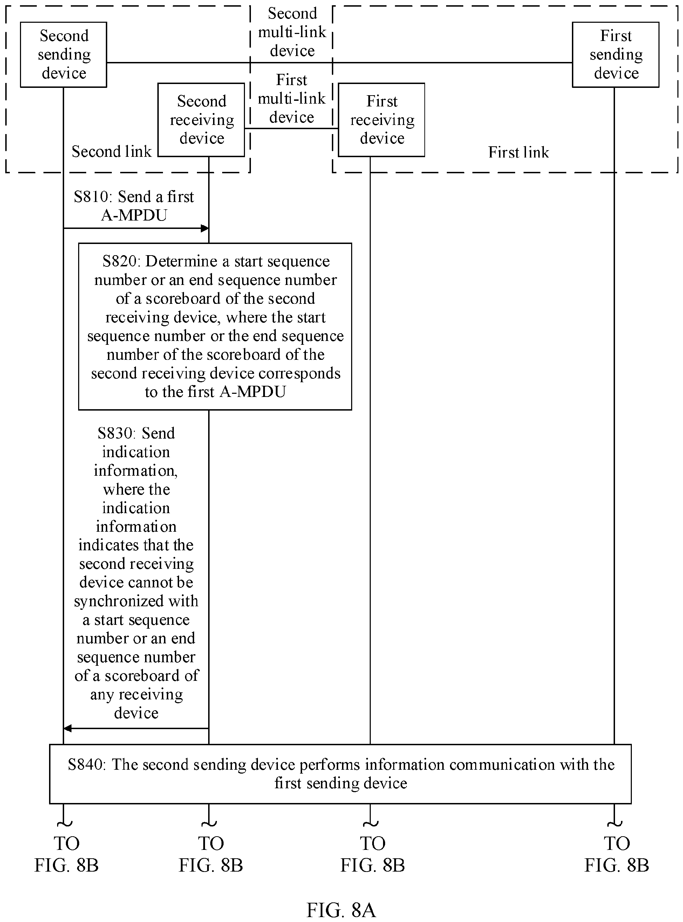

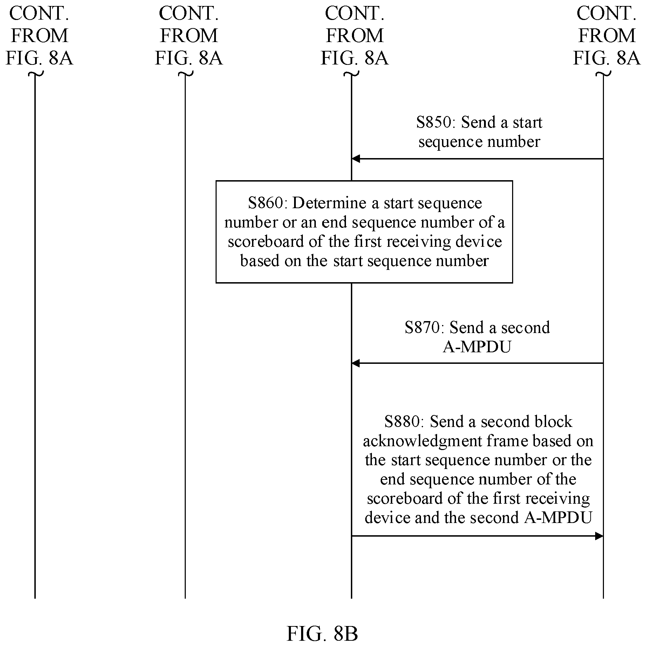

FIG. 8A and FIG. 8B are a schematic flowchart of yet another multi-link communication method according to an embodiment of this application. The method includes the following steps.

S810 and S820 are the same as steps S610 and S620.

S830: The second receiving device sends indication information to the second sending device, where the indication information indicates that the second receiving device cannot be synchronized with a start sequence number or an end sequence number of a scoreboard of any receiving device.

Correspondingly, the second sending device receives the indication information sent by the second receiving device.

Specifically, when the second receiving device determines that the first A-MPDU is received and a window of the scoreboard moves, the second receiving device may send the indication information to the second sending device, where the indication information indicates that the second receiving device cannot be synchronized with the start sequence number or the end sequence number of the scoreboard of the any receiving device. It should be understood that the any receiving device includes a first receiving device.

It should be further understood that, a process in which the second receiving device sends the indication information to the second sending device may be understood as a process in which the second receiving device is synchronized with a scoreboard of the first receiving device by using the second sending device.

S840: The second sending device performs information communication with a first sending device.

Specifically, the first sending device and the second sending device belong to a second MLD. Therefore, the second sending device may indicate, to the first sending device in an internal information exchange manner, that the first sending device needs to send a start sequence number (SSN) to the first receiving device, to be synchronized with the scoreboard of the first receiving device (which may also be understood as helping the second receiving device be synchronized with the scoreboard of the first receiving device).

S850: The first sending device sends the start sequence number to the first receiving device.

Correspondingly, the first receiving device receives the start sequence number sent by the first sending device.

It should be understood that the SSN is coupled to the first A-MPDU. Specifically, the second receiving device determines the start sequence number or the end sequence number of the scoreboard of the second receiving device after receiving the first A-MPDU, and sends the indication information to the second sending device, to indicate that the second receiving device cannot be synchronized with the scoreboard of the any receiving device. After communicating with the second sending device based on internal information, the first sending device determines to send the SSN to the first receiving device.

It should be understood that the coupling relationship may be embodied as follows: The SSN may be a sequence number of a first MPDU whose receiving status needs to be recorded in the first A-MPDU, or may not be a sequence number of a first MPDU whose receiving status needs to be recorded in the first A-MPDU. However, the SSN is sent by the first sending device to the first receiving device after the second receiving device sends the indication information to the second sending device. Therefore, the SSN is coupled to the first A-MPDU. S860: The first receiving device determines a start sequence number or an end sequence number of the scoreboard of the first receiving device based on the start sequence number.

Specifically, the first receiving device obtains the SSN sent by the first sending device, sets the start sequence number of the scoreboard of the first receiving device to the SSN, and correspondingly changes the end sequence number of the scoreboard of the first receiving device, to determine the end sequence number of the scoreboard of the first receiving device.

Therefore, the first receiving device is synchronized with or changes the start sequence number or the end sequence number of the scoreboard of the first receiving device based on the SSN, so that receiving statuses of all MPDUs in a second A-MPDU can be correctly recorded.

It should be understood that a time at which the first sending device sends the SSN to the first receiving device may be after the second receiving device sends a first BA frame corresponding to the first A-MPDU and before the second receiving device receives a next A-MPDU, or before the second receiving device processes, at an end of a current TXOP and in a new TXOP, scoreboard context of a next received A-MPDU that is not sent at the end of the current TXOP and that belongs to a same transmit end and a same TID as the first BA frame. In addition, the first sending device needs to send the SSN to the first receiving device before the first sending device sends the second A-MPDU to the first receiving device.

It should be understood that the SSN sent by the first sending device to the first receiving device may be carried in a BAR frame, an ADDBA request frame, or other information.

S870 and S880 are the same as the foregoing steps S650 and S660.

According to the foregoing method, in a multi-link communication scenario, when a data transmit end sends, along a plurality of links, a plurality of A-MPDUs corresponding to a same TID to a data receive end, receiving devices of different links can correctly feed back receiving statuses of all MPDUs in the received A-MPDUs in this embodiment of this application.

According to the foregoing technical solution, in this embodiment of this application, the first receiving device can update or be synchronized with the start sequence number or the end sequence number of the scoreboard of the first receiving device by receiving the start sequence number sent by the first sending device, so that a received A-MPDU can be processed according to a scoreboard context update rule, receiving statuses of all MPDUs in the A-MPDU can be correctly recorded based on a newly determined start sequence number or end sequence number of the scoreboard, and no information is incorrectly reported.

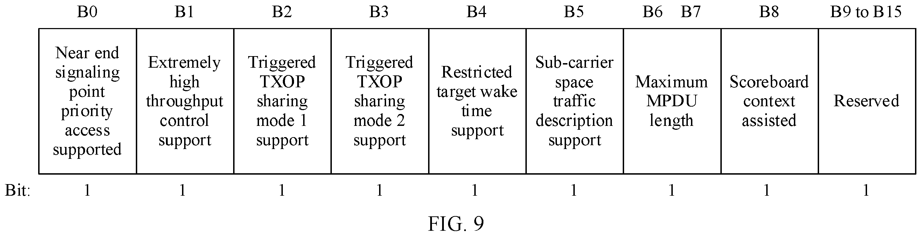

FIG. 9 is a schematic diagram of a frame structure of the indication information according to an embodiment of this application. Details are shown in FIG. 9.

The indication information sent by the second receiving device to the second sending device is carried in an extreme high throughput MAC capabilities information field (extreme high throughput MAC capabilities information field). This field includes near end signaling point priority access supported (near end signaling point priority access supported), EHT operation mode control support (EHT operation mode control support), triggered TXOP sharing mode 2 support (triggered TXOP sharing mode 1 support), triggered TXOP sharing mode 2 support (triggered TXOP sharing mode 2 support), restricted target wake time support (restricted target wake time support), a subcarrier space traffic description support (subcarrier space traffic description support) subfield, a maximum MPDU length (maximum MPDU length) subfield, a scoreboard context assisted (scoreboard context assisted) subfield, and a reserved (Reserved) subfield.

The scoreboard context assisted subfield in the foregoing field is the indication information, and indicates that the second receiving device cannot be synchronized with the start sequence number or the end sequence number of the scoreboard of the any receiving device. B in FIG. 9 indicates a bit. For example, B2 indicates a second bit, and B8 indicates an eighth bit. The following row indicates a bit occupied by each subfield.

It should be noted that, when an SN of an MPDU belongs to WinStart_{B} + 2¹¹ ≤ SN < WinStart_{B}, in this embodiment of this application, a scoreboard of a receiving device may still be maintained based on the foregoing technical solution according to a scoreboard context control update rule obtained when the SN is in a range of WinEnd_{R} < SN < WinStart_{R} + 2¹¹, and a receiving status of the MPDU corresponding to the SN is correctly recorded.

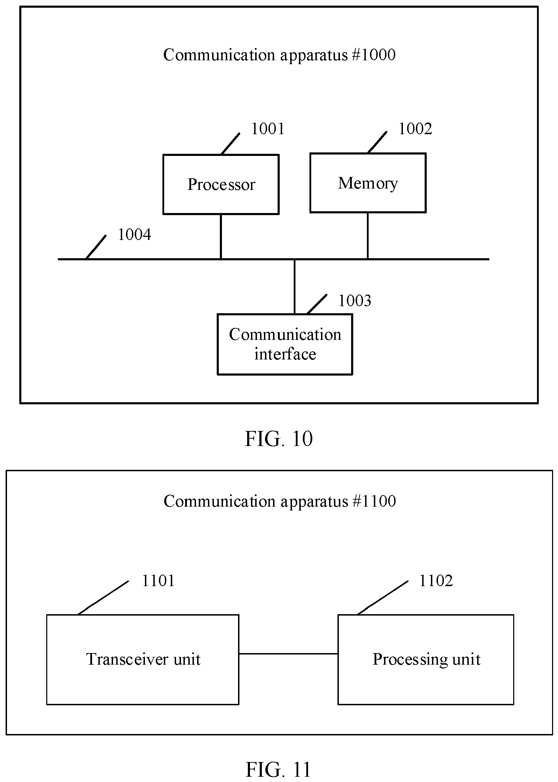

FIG. 10 is a schematic diagram of a multi-link device according to an embodiment of this application. The multi-link device includes a processor 1001, a memory 1002, and a communication interface 1003. The processor 1001, the memory 1002, and the communication interface 1003 are connected to each other through a bus 1004.

It should be understood that the multi-link device shown in FIG. 10 may be a sending device, a first receiving device, or a second receiving device.

The memory 1002 includes, but is not limited to, a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1002 is configured to store related instructions and related data.

The processor 1001 may be one or more central processing units (central processing unit, CPU). When the processor 901 is one CPU, the CPU may be a single-core CPU, or may be a multi-core CPU.

When the multi-link device is the sending device (which may include a first sending device and a second sending device), the processor 1001 in the communication apparatus is configured to read program code stored in the memory 1002, to perform the following operations:

The sending device sends an A-MPDU to a receiving device, and is also configured to receive a block acknowledgment frame; or the second sending device receives indication information sent by a second receiving device, where the indication information indicates that the second receiving device cannot be synchronized with a start sequence number or an end sequence number of a scoreboard of any receiving device; or the first sending device sends an SSN to a first receiving device.

It should be understood that the sending device may be configured to perform the steps or methods related to the sending device in the foregoing method embodiments. This is merely an example for description herein. For specific content, refer to content in the foregoing method embodiments.

When the multi-link device is the second receiving device, the processor 1001 in the multi-link device is configured to read program code stored in the memory 1002, to perform the following operations:
receiving a first A-MPDU; and
determining a start sequence number or an end sequence number of a scoreboard of the second receiving device, where the start sequence number or the end sequence number of the scoreboard of the second receiving device corresponds to the first A-MPDU.

It should be understood that the second receiving device may be configured to perform the steps or methods related to the second receiving device in the foregoing method embodiments. This is merely an example for description herein. For specific content, refer to content in the foregoing method embodiments.

When the multi-link device is the first receiving device, the processor 1001 in the multi-link device is configured to read program code stored in the memory 1002, to perform the following operations:
determining a start sequence number or an end sequence number of a scoreboard of the first receiving device, where the start sequence number or the end sequence number of the scoreboard of the first receiving device corresponds to a first A-MPDU sent by a second access point to the second receiving device; and
receiving a second A-MPDU sent by the first sending device.

It should be understood that the first receiving device may be configured to perform the steps or methods related to the first receiving device in the foregoing method embodiments. This is merely an example for description herein. For specific content, refer to content in the foregoing method embodiments.

In addition, for implementation of each operation in FIG. 10, refer to corresponding descriptions of the method embodiments shown in FIG. 5 to FIG. 8B. This is merely an example for description herein, and details are not described again.

FIG. 11 is a schematic diagram of still another multi-link device according to an embodiment of this application. The multi-link device is used in a sending device or a receiving device, and may be configured to implement the methods in the foregoing embodiments. The multi-link device includes a transceiver unit 1101 and a processing unit 1102. The following describes the transceiver unit 1101 and the processing unit 1102 by using examples.

When the multi-link device is the sending device, the transceiver unit 1101 is configured to receive a block acknowledgment frame sent by a receiving device. The processing unit 1102 is configured to perform a step or method related to a BA session.

When the multi-link device is a second receiving device, the transceiver unit 1101 is configured to receive a first A-MPDU and send a start sequence number or an end sequence number of a scoreboard of the second receiving device to a first receiving device. The processing unit 1102 is configured to determine the start sequence number or the end sequence number of the scoreboard of the corresponding second receiving device based on the first A-MPDU.

When the multi-link device is a first receiving device, the transceiver unit 1101 is configured to receive a second A-MPDU and receive a start sequence number or an end sequence number of a scoreboard of a second receiving device that is sent by the second receiving device. The processing unit 1102 is configured to determine a start sequence number or an end sequence number of a scoreboard of the first receiving device based on the start sequence number or the end sequence number of the scoreboard of the second receiving device.

In addition, for implementation of each operation in FIG. 11, refer to corresponding descriptions of the methods shown in the foregoing embodiments. Details are not described herein again.

It should be noted that the foregoing multi-link device may include a first communication apparatus (for example, the foregoing first receiving device) and a second communication apparatus (for example, the foregoing second receiving device). The first communication apparatus may include a processing module and a transceiver module. The processing module is configured to perform the foregoing actions or steps related to the first communication apparatus, and the transceiver module is configured to perform the foregoing actions or steps related to the first communication apparatus. The descriptions may also be applicable to the second communication apparatus. Details are not described herein again.

An embodiment of this application further provides a chip, including a processor, configured to invoke, from a memory, instructions stored in the memory and run the instructions, to enable a communication device on which the chip is installed to perform the methods in the foregoing examples. The chip may be the foregoing multi-link device. For example, the chip is the AP MLD or the STA MLD.

An embodiment of this application further provides another chip, including an input interface, an output interface, a processor, and a memory. The input interface, the output interface, the processor, and the memory are connected by using an internal connection path. The processor is configured to execute code in the memory. When the code is executed, the processor is configured to perform the methods in the foregoing examples.

An embodiment of this application further provides a processor, configured to be coupled to a memory, and configured to perform the method and function related to a receiving device or a sending device in any one of the foregoing embodiments.

In another embodiment of this application, a computer program product is provided. When the computer program product runs on a computer, the method in the foregoing embodiment is implemented.

In another embodiment of this application, a computer-readable storage medium is provided. The computer-readable storage medium stores a computer program. When the computer program is executed by a computer, the method in the foregoing embodiment is implemented.

In the descriptions of embodiments of this application, the term "a plurality of" means two or more than two unless otherwise specified. "At least one of the following items (pieces)" or a similar expression thereof refers to any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, terms such as first and second are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, the expression such as "example" or "for example" is used to represent giving an example, an illustration, or description.

Any embodiment or design scheme described as an "example" or "for example" in embodiments of this application should not be explained as being more preferred or having more advantages than another embodiment or design scheme. Exactly, use of the expressions such as "example" and "for example" is intended to present a relative concept in a specific manner for ease of understanding.

Unless otherwise specified, "/" in the descriptions of embodiments of this application represents an "or" relationship between associated objects. For example, A/B may represent A or B. In this application, "and/or" represents only an association relationship for describing associated objects and represents that three relationships may exist. For example, A and/or B may represent the following three cases: Only A exists, both A and B exist, and only B exists. A and B may be singular or plural.

It should be understood that "one embodiment" or "an embodiment" mentioned throughout this specification means that specific characteristics, structures, or features related to the embodiments are included in at least one embodiment of the present invention.

Therefore, "in one embodiment" or "in an embodiment" appearing in the specification does not refer to a same embodiment. In addition, these particular features, structures, or characteristics may be combined in one or more embodiments by using any appropriate manner. Sequence numbers of the foregoing processes do not mean execution sequences in various embodiments of the present invention. The execution sequences of the processes should be determined based on functions and internal logic of the processes, and should not be construed as any limitation on the implementation processes of embodiments of the present invention.

It may be understood that "an embodiment" mentioned in the entire specification means that particular features, structures, or characteristics related to the embodiment are included in at least one embodiment of this application.

Therefore, embodiments in the entire specification do not necessarily refer to a same embodiment. In addition, these particular features, structures, or characteristics may be combined in one or more embodiments by using any appropriate manner. It may be understood that sequence numbers of the foregoing processes do not mean execution sequences in various embodiments of this application. The execution sequences of the processes should be determined based on functions and internal logic of the processes, and should not be construed as any limitation on the implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments, and details are not described herein again. In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed.

In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments. In addition, functional units in embodiments of this application may be integrated into one processing unit, each of the units may exist alone physically, or two or more units are integrated into one unit.

When functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A multi-link communication method, wherein a multi-link device receives a second aggregated medium access control protocol data unit A-MPDU over a first link, and receives a first A-MPDU over a second link, wherein the first A-MPDU and the second A-MPDU have a same traffic identifier, and the first A-MPDU is received before the second A-MPDU; and
the method comprises:
determining, by the multi-link device, a start sequence number or an end sequence number of a scoreboard on the first link based on the first A-MPDU received over the second link; and
sending, by the multi-link device, a first block acknowledgment frame over the first link based on the start sequence number or the end sequence number of the scoreboard on the first link and the received second A-MPDU, wherein the first block acknowledgment frame is used to acknowledge a receiving status of the second A-MPDU.

2. The method according to claim 1, wherein the method further comprises:
determining, by the multi-link device, a start sequence number or an end sequence number of a scoreboard on the second link based on the first A-MPDU received over the second link; and
sending, by the multi-link device, a second block acknowledgment frame over the second link based on the start sequence number or the end sequence number of the scoreboard on the second link and the received first A-MPDU, wherein the second block acknowledgment frame is used to acknowledge a receiving status of the first A-MPDU.

3. The method according to claim 1 or 2, wherein a window size of the scoreboard on the first link is the same as a window size of the scoreboard on the second link.

4. The method according to any one of claims 1 to 3, wherein the multi-link device comprises a first receiving device on the first link and a second receiving device on the second link; and
the determining, by the multi-link device, a start sequence number or an end sequence number of a scoreboard on the first link based on the first A-MPDU received over the second link comprises:
determining, by the first receiving device, a start sequence number or an end sequence number of a scoreboard of the first receiving device based on a start sequence number or an end sequence number of a scoreboard of the second receiving device, wherein
the start sequence number or the end sequence number of the scoreboard of the second receiving device corresponds to the first A-MPDU.

5. The method according to any one of claims 1 to 3, wherein the multi-link device comprises a first receiving device on the first link and a second receiving device on the second link; and
the determining, by the multi-link device, a start sequence number or an end sequence number of a scoreboard on the first link based on the first A-MPDU received over the second link comprises:
determining, by the first receiving device, a start sequence number or an end sequence number of a scoreboard of the first receiving device based on a start sequence number or an end sequence number of a common scoreboard of the multi-link device, wherein
the start sequence number or the end sequence number of the common scoreboard of the multi-link device is determined based on the first A-MPDU.

6. The method according to any one of claims 1 to 3, wherein the multi-link device comprises a first receiving device on the first link and a second receiving device on the second link; and
the determining, by the multi-link device, a start sequence number or an end sequence number of a scoreboard on the first link based on the first A-MPDU received over the second link comprises:
receiving, by the first receiving device, a start sequence number sent by a sending device on the first link, wherein the start sequence number is coupled to the first A-MPDU; and
determining, by the first receiving device, a start sequence number or an end sequence number of a scoreboard of the first receiving device based on the start sequence number.

7. The method according to claim 6, wherein the start sequence number is carried in an add block acknowledgment request frame or a block acknowledgment request frame.

8. The method according to claim 1, wherein the multi-link device comprises a second receiving device on the second link, and the method further comprises:
sending, by the multi-link device, indication information over the second link, wherein the indication information indicates that the second receiving device cannot be synchronized with a start sequence number or an end sequence number of a scoreboard of a receiving device of any link.

9. The method according to any one of claims 1 to 8, wherein the first block acknowledgment frame of the first A-MPDU is sent before the second A-MPDU is received.

10. A multi-link device, wherein the multi-link device receives a second aggregated medium access control protocol data unit A-MPDU over a first link, and receives a first A-MPDU over a second link, wherein the first A-MPDU and the second A-MPDU have a same traffic identifier, and the first A-MPDU is received before the second A-MPDU; and
the multi-link device comprises:
a processing unit, configured to determine a start sequence number or an end sequence number of a scoreboard on the first link based on the first A-MPDU received over the second link, wherein
the processing unit is further configured to determine a first acknowledgment frame based on the start sequence number or the end sequence number of the scoreboard on the first link and the received second A-MPDU, wherein the first block acknowledgment frame is used to acknowledge a receiving status of the second A-MPDU; and
a transceiver unit, configured to send the first block acknowledgment frame over the first link.

11. The multi-link device according to claim 10, wherein
the processing unit is configured to determine a start sequence number or an end sequence number of a scoreboard on the second link based on the first A-MPDU received over the second link;
the processing unit is configured to determine a second block acknowledgment frame based on the start sequence number or the end sequence number of the scoreboard on the second link and the received first A-MPDU, wherein the second block acknowledgment frame is used to acknowledge a receiving status of the first A-MPDU; and
the transceiver unit is configured to send the second block acknowledgment frame over the second link.

12. The multi-link device according to claim 10 or 11, wherein a window size of the scoreboard on the first link is the same as a window size of the scoreboard on the second link.

13. The multi-link device according to any one of claims 10 to 12, wherein the multi-link device comprises a first communication apparatus on the first link and a second communication apparatus on the second link, and the first communication apparatus comprises a processing module;
the processing module is configured to determine a start sequence number or an end sequence number of a scoreboard of the first communication apparatus based on a start sequence number or an end sequence number of a scoreboard of the second communication apparatus; and
the start sequence number or the end sequence number of the scoreboard of the second communication apparatus corresponds to the first A-MPDU.

14. The multi-link device according to any one of claims 10 to 12, wherein the multi-link device comprises a first communication apparatus on the first link and a second communication apparatus on the second link, and the first communication apparatus comprises a processing module;
the processing module is configured to determine a start sequence number or an end sequence number of a scoreboard of the first communication apparatus based on a start sequence number or an end sequence number of a common scoreboard of the multi-link device; and
the start sequence number or the end sequence number of the common scoreboard of the multi-link device corresponds to the first A-MPDU.

15. The multi-link device according to any one of claims 10 to 12, wherein the multi-link device comprises a first communication apparatus on the first link and a second communication apparatus on the second link, and the first communication apparatus comprises a processing module and a transceiver module;
the transceiver module is configured to receive a start sequence number sent by a sending device on the first link, wherein the start sequence number is coupled to the first A-MPDU;
the processing module is configured to determine a start sequence number or an end sequence number of a scoreboard of the first communication apparatus based on the start sequence number; and
the start sequence number is coupled to the first A-MPDU.

16. The multi-link device according to claim 15, wherein the start sequence number is carried in an add block acknowledgment request frame or a block acknowledgment request frame.

17. The multi-link device according to claim 10, wherein the multi-link device comprises a second communication apparatus on the second link; and
the transceiver unit is configured to send indication information over the second link, wherein the indication information indicates that the second communication apparatus cannot be synchronized with a start sequence number or an end sequence number of a scoreboard of a communication apparatus of any link.

18. The multi-link device according to any one of claims 10 to 17, wherein the first block acknowledgment frame of the first A-MPDU is sent before the second A-MPDU is received.

19. A computer-readable storage medium, comprising computer programs or instructions, wherein when the computer programs or the instructions are run on a computer, the computer is enabled to perform the method according to any one of claims 1 to 9.

20. A computer program product, comprising instructions, wherein when the instructions are run on a computer, the computer is enabled to perform the method according to any one of claims 1 to 9.
